# EUROPEAN PATENT SPECIFICATION

(11) **EP 1 695 843 B1**
(45) Date of publication and mention of the grant of the patent: **05.06.2013**
(21) Application number: 04792362.8
(22) Date of filing: 14.10.2004
(51) Int. Cl.: B60C 11/04, B60C 11/03, B60C 11/12

(54) **PNEUMATIC TIRE**
LUFTREIFEN
PNEUMATIQUE

(30) Priority: 15.10.2003 JP 2003355123
(43) Date of publication of application: 30.08.2006
(73) Proprietor: THE YOKOHAMA RUBBER CO., LTD., Tokyo 105-8685 (JP)
(72) Inventor: YAMANE, Kenji; c/o The Yokohama Rubber Co., Ltd., Kanagawa; 2548601 (JP)
(74) Representative: HOFFMANN EITLE
(86) International application number: PCT/JP2004/015130
(87) International publication number: WO 2005/037574

(56) References cited:
- WO-A1-01/02194
- GB-A- 1 254 699
- JP-A- 7 172 110
- JP-A- 8 091 023
- JP-A- 8 091 023
- US-A- 3 789 898

## Description

### TECHNICAL FIELD

The present invention relates to a pneumatic tire where a tread pattern is constituted mainly of grooves extending in a circumferential direction of the tire, and narrow grooves. More specifically, the present invention relates to a pneumatic tire whereby simultaneous pursuit of wet performance and noise performance is made possible with driving stability being enhanced.

### BACKGROUND ART

For the purposes of enhancing wet performance of a pneumatic tire and of pursuing noise reduction thereof, it is a general practice to provide a plurality of main grooves extending in a circumferential direction of the tire and a plurality of lug grooves inclining relative to an equatorial line of the tire (for example, refer to Japanese Unexamined Patent Application publication No. Hei10-2646121 and Japanese Unexamined Patent Application publication No. Hei6-239111). Here, an increase of a negative ratio (a groove area ratio) is effective for wet performance enhancement while a reduction of the negative ratio is effective for noise reduction. Thus, these respective improving conditions for wet performance and noise performance contradict each other. Accordingly, it has been attempted to devise inclination angles and widths of the lug grooves.

As long as the tire has lug grooves, however, there is naturally a limit in simultaneous pursuit of wet performance and noise performance no matter how inclination angles and widths of the lug grooves are devised. Hence, it is difficult to respond to a demand for further improvements therefor. Additionally, there is another problem that deterioration in driving stability is brought about with increasing negative ratio.

JP 8091023 A discloses a tire tread pattern, but fails to disclose the characterizing features of Claim 1. Tread patterns for pneumatic tires are also disclosed in WO 01/02194 A1 and GB 1254699 A.

### SUMMARY OF THE INVENTION

Embodiments of the present invention are able to provide a pneumatic tire whereby simultaneous pursuit of wet performance and noise performance is made possible with driving stability being enhanced.

According to the present invention, there is provided a pneumatic tire including a rib-like land portion which is located on a center portion of a tread and extends in a circumferential direction of the tire, a pair of left and right first main grooves abutting to one and the other sides of the rib-like land portion and extending in the tire circumferential direction, and a pair of left and right first land portions abutting to one and the other outsides of the first main grooves and extending in the tire circumferential direction. The pneumatic tire is characterized in that a narrow groove extending in the tire circumferential direction is provided on the rib-like land portion, and a plurality of lug grooves which do not communicate with the first main grooves and incline relative to an equatorial line of the tire, and a wavy or zigzag narrow groove extending in the tire circumferential direction are provided on each of the first land portions; and that the shortest distance W2 between the wavy or zigzag narrow groove and an outside wall of the first land portions is set between 60 and 70%, inclusive, of a width W1 of each of the first land portions, and an amplitude W3 of the wavy or zigzag narrow grooves is set between 5 and 12%, inclusive, of a width W1 of each of the first land portions.

In embodiments of the present invention, by constituting a tread pattern mainly of grooves extending in the tire circumferential direction (circumferential grooves including main grooves and auxiliary grooves) and narrow grooves and additionally by specifying a configuration of the tread pattern, it becomes possible to provide a pneumatic tire allowed to improve, among driving stability properties, particularly behavior during straight traveling, and also to exert excellent wet performance and noise performance.

Particularly, while sufficient block stiffness can be secured by providing the tire with the first land portions through which the lug grooves do not penetrate, both braking performance and cornering performance on a wet road surface are enhanced, and furthermore, quietness can be enhanced, by providing it with the wavy or zigzag narrow grooves extending in the tire circumferential direction. Additionally, by providing on the rib-like land portion a narrow groove extending in the tire circumferential direction, it becomes possible to improve, among driving stability properties, behavior during straight traveling.

In embodiments of the present invention, by further devising locations and measurements of the circumferential grooves and lug grooves, it becomes possible to simultaneously pursue driving stability, wet performance, and noise performance at high levels. For example, if groove widths of the respective lug grooves are made wider in a region outward with respect to the tread center than in a region closer to the tread center, wet performance can be further enhanced with noise performance maintained. Additionally, if at least one narrow groove is arranged between each two of the lug grooves, the braking performance on a wet road surface can be further enhanced.

Furthermore, the tire is provided with: a pair of left and right second main grooves abutting to one and the other outsides of the first land portions and extending in the tire circumferential direction; a pair of left and right second land portions abutting to one and the other outsides of the second main grooves and extending in the tire circumferential direction; a pair of left and right auxiliary grooves abutting to one and the other outsides of the second land portions and extending in the tire circumferential direction; and a pair of left and right third land portions abutting to one and the other outsides of the second auxiliary grooves and extending in the tire circumferential direction. As the above second main grooves and the auxiliary grooves are added, drainage can be further enhanced.

In the abovementioned tread pattern, it is preferable that a width of the rib-like land portion be between 9 and 13%, inclusive, of a ground contacting width of the tread; a distance between a centerline of each of the first main grooves and the tire equatorial line be between 7 and 10%, inclusive, of the tread ground contacting width; a distance between a centerline of each of the second main grooves and the tire equatorial line be between 25 and 29%, inclusive, of the tread ground contacting width; and a distance between a centerline of each of the auxiliary grooves and the tire equatorial line be between 38 and 43%, inclusive, of the tread ground contacting width. Additionally, it is preferable that, within a ground contacting surface of the tire, an area ratio of all of the grooves extending in the tire circumferential direction be between 25 and 35% inclusive. By having these conditions satisfied, drainage can be enhanced without impairing driving stability.

It is preferable that the second land portions include only narrow grooves, and the third land portions include only narrow grooves within the tire ground contacting surface. Additionally, it is preferable that a number of pitches of a repeated element of the tread be between 70 and 80 inclusive. By having these conditions satisfied, it becomes possible to simultaneously pursue the braking performance on a wet road surface and the noise performance. Furthermore, if the tread has a directional pattern where a direction of rotation when the tire is mounted on a vehicle is specified, the abovementioned improving effects become more remarkable.

In the present specification, a narrow groove means a groove having a width between 0.1 and 1.5 mm inclusive, an auxiliary groove means a groove having a width between 2.0 and 3.5 mm inclusive, and a lug groove means a groove having a width exceeding 1.5 mm. Additionally, a main groove is a groove to which a tread wear indicator (JIS D4230) is applied.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a plan view showing a tread pattern of a pneumatic tire configured of an embodiment of the present invention; and
Fig. 2 is a plan view showing an enlarged view of a first land portion of the pneumatic tire configured of the embodiment of the present invention.

### DETAILED DESCRIPTION

Hereinafter, with reference to the accompanying drawings, a detailed description will be given of a configuration of the present invention.

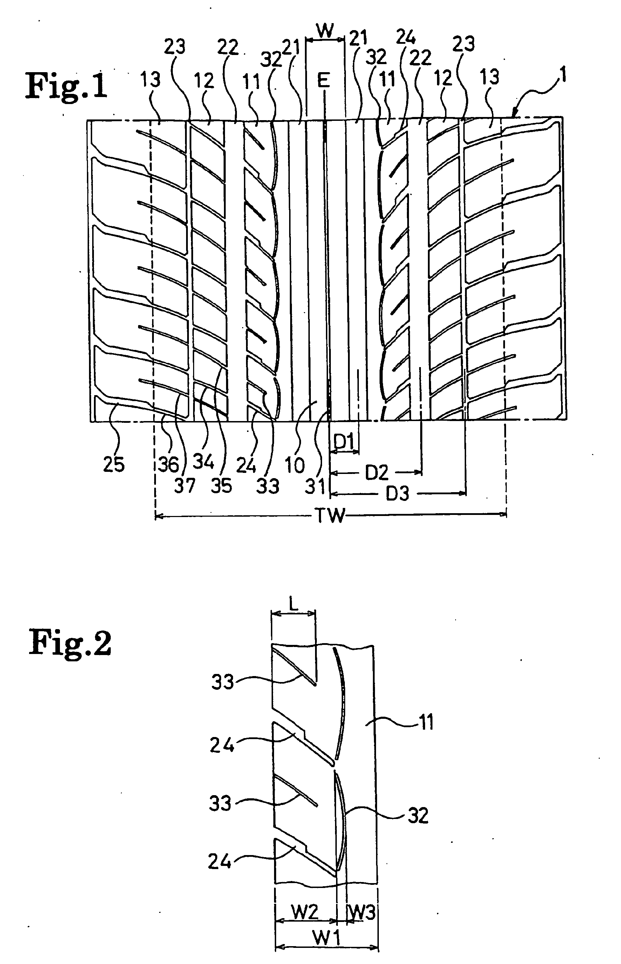

Fig. 1 shows a tread pattern of a pneumatic tire configured of an embodiment of the present invention, and Fig. 2 shows a first land portion thereof. As shown in Fig. 1, arranged on a tread 1 are: a rib-like land portion 10 located on a center portion of the tread 1 and extending in a circumferential direction of the tire; a pair of left and right main grooves 21, 21 (first main grooves) abutting to one and the other sides of the rib-like land portion 10 and extending in the tire circumferential direction; and a pair of left and right land portions 11, 11 (first land portions) abutting to one and the other outsides of the main grooves 21, 21 and extending in the tire circumferential direction; a pair of left and right main grooves 22, 22 (second main grooves) abutting to one and the other outsides of the land portions 11, 11 and extending in the tire circumferential direction; a pair of left and right land portions 12, 12 (second land portions) abutting to one and the other outsides of the main grooves 22, 22 and extending in the tire circumferential direction; a pair of left and right auxiliary grooves 23, 23 abutting to one and the other outsides of the land portions 12, 12 and extending in the tire circumferential direction; and land portions 13, 13 (third land portions) abutting to one and the other outsides of the second auxiliary grooves 23, 23 and extending in the tire circumferential direction.

On the rib-like land portion 10, there is formed a narrow groove 31 extending in the tire circumferential direction. On the land potion 11 located outside to the rib-like land portion 10, there are formed a plurality of lug grooves 24 inclining relative to an equatorial line E of the tire and a wavy or zigzag narrow groove 32 extending in the tire circumferential direction. Each of the lug grooves 24 does not communicate with the main groove 21 located to the tread center side of the each, but communicates with the main groove 22 located to the outside thereof. The narrow groove 32 may be connected or may not necessarily be connected with the lug grooves 24. Furthermore, at least one narrow groove 33 is arranged between each two of the lug grooves 24.

On the other hand, on the land portion 12 located outward with respect to the land portion 11, a plurality of narrow grooves 34 and a plurality of narrow grooves 35 are arranged alternately along the tire circumferential direction, the narrow grooves 34 and 35 inclining relative to the tire equatorial line E. Furthermore, on the land portion 13 located most closely to a shoulder of the tire, a plurality of narrow grooves 36 and a plurality of narrow grooves 37 are arranged alternately along the tire circumferential direction, the narrow grooves 36 and 37 inclining relative to the tire equatorial line E. There, each of the narrow grooves 36 is linked to one of the lug grooves 25 in a region outside of a tire ground contacting surface formed of a ground contacting width TW of the tread. Specifically, the land portion 12 includes only the narrow grooves and the land portion 13 includes only the narrow grooves inside the tire ground contacting surface. Note that, the tread ground contacting width TW is a ground contacting width obtained when the tire is mounted on a measurement rim defined in the JATMA yearbook (the 2003 version), inflated with a test pneumatic pressure 180 kPa, and loaded with 80% of its maximum load.

In the above pneumatic tire, as shown in Fig. 2, the shortest distance W2 between the wavy or zigzag narrow groove 32 and an outside wall of the land portion 11 is set between 60 and 70%, inclusive, of a width W1 of the land portion 11, and an amplitude W3 of the wavy or zigzag narrow groove 32 is set between 5 and 12%, inclusive, of the width W1 of the land portion 11.

In the pneumatic tire configured in the abovementioned manner, because the tread pattern is constituted mainly of grooves (the main grooves 21 and 22 and the auxiliary grooves 23) and narrow grooves (the narrow grooves 31 to 37), and because the configuration thereof is specified as above, behavior during straight traveling in particular can be improved among driving stability properties, and excellent wet performance and noise performance can be exerted.

Particularly, sufficient block stiffness is secured because the land portions 11 through which the lug grooves 24 do not penetrate are provided to both sides of the rib-like land portion 10. Moreover, because the wavy or zigzag narrow groove 32 extending in the tire circumferential direction is provided on each of the land portions 11, braking performance and cornering performance on a wet road surface are enhanced, and furthermore, quietness can be enhanced. Additionally, because the narrow groove 31 extending in the tire circumferential direction is provided on the rib-like land portion 10, behavior during straight traveling in particular can be improved among driving stability properties.

Here, if the shortest distance W2 between the wavy or zigzag narrow groove 32 and an outside wall, which faces the main groove 22, of the land portion 11 is less than 60% of the width W1 of the land portion 11, braking performance and cornering performance on a wet road surface becomes insufficient. On the contrary, if it exceeds 70%, driving stability becomes insufficient. If the amplitude W3 of the wavy or zigzag narrow groove 32 is less than 5% of the width W1 of the land portion 11, braking performance and cornering performance on a wet road surface becomes insufficient, and, on the contrary, if it exceeds 12%, driving stability becomes insufficient.

In the above pneumatic tire, groove widths of the respective lug grooves 24 are made wider in a region outward with respect to the tread center than in a region closer to the tread center. By making the groove widths of the respective lug grooves 24 wider in a region outward with respect to the tread center than in a region closer to the tread center, wet performance can be further enhanced with noise performance maintained. Particularly, in a case where each of the groove widths of the respective lug grooves 24 is made into 2 phases, deterioration in noise performance can be suppressed even if the changes in width are made large. It is preferable that, in each of the lug grooves 24, a ratio of a part having a narrower width to a part having a wider width be between 0.3 and 0.7 inclusive.

If at least one narrow groove 33 is arranged between each two of the lug grooves 24, an edge amount is increased, whereby wet performance can be further enhanced. Here, if the narrow groove 33 is too long and is communicating with the wavy or zigzag narrow groove 32, it is not preferable in terms of block stiffness. On the contrary, if the narrow groove 33 is too short, an edge amount is not sufficiently increased, whereby an improving effect on wet performance becomes insufficient. Accordingly, as shown in Fig. 2, it is favorable that a length L of the narrow groove 33 in an axial direction of the tire be in a range between 40 and 50%, inclusive, of the width W1 of the land portion 11.

Furthermore, drainage can be further enhanced if the tire is provided with: the pair of left and right main grooves 22 abutting to one and the other outsides of the land portions 11 and extending in the tire circumferential direction; the pair of left and right land portions 12 abutting to one and the other outsides of the main grooves 22 and extending in the tire circumferential direction; the pair of left and right auxiliary grooves 23 abutting to one and the other outsides of the land portions 12 and extending in the tire circumferential direction; and the land portions 13 abutting to one and the other outsides of the auxiliary grooves 23 and extending in the tire circumferential direction. With respect to the auxiliary grooves 23, block stiffness becomes insufficient if a width of each of them is too wide, and drainage becomes insufficient if it is too narrow. Accordingly, it is preferable that a groove width of each of the auxiliary grooves 23 be between 1 and 2%, inclusive, of the tread ground contacting width.

In the above pneumatic tire, as shown in Fig. 1, it is preferable that: a width W of the rib-like land portion 10 be between 9 and 13%, inclusive, of the tread ground contacting width TW; a distance D1 between a centerline of each of the main grooves 21 and the tire equatorial line E be between 7 and 10%, inclusive, of the tread ground contacting width TW; a distance D2 between a centerline of each of the main grooves 22 and the tire equatorial line E be between 25 and 29%, inclusive, of the tread ground contacting width TW; and a distance D3 between a centerline of each of the auxiliary grooves 23 and the tire equatorial line E be between 38 and 48%, inclusive, of the tread ground contacting width TW. Additionally, it is preferable that, within a ground contacting surface of the tire, an area ratio of all of the grooves extending in the tire circumferential direction be between 25 and 35% inclusive. By having these conditions satisfied, drainage can be enhanced without impairing driving stability.

In the above pneumatic tire, the land portions 12 include only the narrow grooves, and the land portions 13 include only the narrow grooves within the tire ground contacting surface. Additionally, it is preferable that a number of pitches of a repeated element of the tread 1, such as each of the lug grooves 24, be between 70 and 80 inclusive. By having these conditions satisfied, it becomes possible to pursue simultaneously braking performance on a wet road surface, and noise performance. If the number of pitches of the repeated element is too small, that not only disables the tire from exerting sufficient wet braking performance but also leads to reduction in noise performance. On the contrary, if the number of pitches of the repeated element is too large, that causes the tire to be reduced in block stiffness, whereby driving stability becomes insufficient.

Furthermore, if the tread 1 has a directional pattern where a direction of rotation when the tire is mounted on a vehicle is specified, the abovementioned improving effects become more remarkable. The directional pattern means a pattern where the lug grooves 24, the narrow grooves 33 to 37 and the like on both sides to the tire equatorial line E incline in directions opposite to each other.

While the detailed description has been given of the preferred embodiment of the present invention hereinabove, it should be understood that various modifications to, substitutions for, and replacements with the preferred embodiment can be carried out as long as the modifications, the substitutions, and the replacements do not depart from the scope of the present invention defined by the attached claims.

### Examples

Tires as Examples 1 to 3 were respectively prepared by configuring pneumatic tires each having a tire size of 205/65R15 in the following manner. In each of the tire, a tread pattern as shown in Fig. 1 is formed. These tires were made variously different as shown in Table 1 in a ratio (W2/W1 x 100), with respect to the width W1 of the first land portion, of the shortest distance W2 between the wavy or zigzag narrow groove and the outside wall of the first land portion, and in a ratio (W3/W1 x 100), with respect to the width W1 of the first land portion, of the amplitude W3 of the wavy or zigzag narrow groove.

For the comparison purpose, prepared were tires as Comparative Examples 1 to 3 which were made variously different as shown in Table 1 in the above ratios. Note that a narrow groove was not provided on the rib-like land portion located at the central portion of the tread in each of Comparative Examples 1 and 2.

For these test tires, wet cornering performance, wet braking performance, noise performance and straight traveling property were respectively assessed by using the following test methods, and results thereof are shown in Table 1.

### Wet cornering performance:

Each of the test tires was mounted onto a passenger automobile (a sedan) having a displacement of 3000 cc, with conditions being a rim size of 15 x 6.5JJ and a pneumatic pressure of 190 kPa. Then, steady-state circular cornering on a skid pad having a radius of 30 m was performed, and a maximum lateral acceleration thereof was measured. The assessment results were represented in index numbers obtained by setting a measured value for Comparative Example 1 as 100. The larger index number means that the tire is more excellent in wet cornering performance.

### Wet braking performance:

Each of the test tires was mounted onto a passenger automobile (a sedan) provided with an ABS (antilock braking system) and having a displacement of 3000 cc, with conditions being a rim size of 15 x 6.5JJ and a pneumatic pressure of 190 kPa. Then, braking was performed on a wet road surface having a water depth of 3 mm, with the ABS in operation, from a state traveling at a speed of 100 km/h on a wet road surface, and a braking distance thereof was measured. The assessment results were represented on the basis of inverse of a measured value, in index numbers with a measured value for Comparative Example 1 being set as 100. A larger value of the index number indicates that the tire is more excellent in wet braking performance.

### Noise performance:

Each of the test tires was mounted onto a passenger automobile (a sedan) having a displacement of 3000 cc, with conditions being a rim size of 15 x 6.5JJ and a pneumatic pressure of 190 kPa. Then, a feeling test by panelists was performed with respect to pattern noise at the time of traveling at a speed of 80 km/h on a dry road surface. The assessment results were represented in a 5-point scale obtained by setting a point for Comparative Example 1 as 3. The larger point thereof means that the tire is more excellent in noise performance.

Straight traveling property:

Each of the test tires was mounted onto a passenger automobile (a sedan) having a displacement of 3000 cc, with conditions being a rim size of 15 x 6.5JJ and a pneumatic pressure of 190 kPa. Then, the automobile was driven on a dry road surface, and a feeling test by panelists was performed with respect to straight traveling property at that time. The assessment results were represented in a 5-point scale obtained by setting a point for Comparative Example 1 as 3. The larger point thereof means that the tire is more excellent in straight traveling property.

**Table 1**

| | Comparative Example 1 | Example 1 | Example 2 | Example 3 | Comparative Example 2 | Comparative Example 3 |
|---|---|---|---|---|---|---|
| W2/W1 × 100 (%) | 57 | 60 | 63 | 65 | 70 | 75 |
| W3/W1 × 100 (%) | 4 | 5 | 8 | 10 | 15 | 10 |
| Narrow groove on rib-like land portion | Not present | Present | Present | Present | Not present | Present |
| Wet cornering performance | 100 | 101 | 105 | 105 | 100 | 97 |
| Wet braking performance | 100 | 101 | 107 | 105 | 101 | 98 |
| Noise performance | 3.0 | 3.1 | 3.3 | 3.2 | 2.8 | 3.0 |
| Straight traveling property | 3.0 | 3.2 | 3.2 | 3.2 | 2.9 | 3.0 |

As found in this Table 1, the tires as Examples 1 to 3 were more excellent than those as Comparative Examples 1 to 3 in wet cornering performance, wet braking performance, noise performance and straight traveling property.

## Claims

1. A pneumatic tire comprising:
a rib-like land portion (10) located on a center portion of a tread (1) and extending in a circumferential direction of the tire;
a pair of left and right first main grooves (21, 21) abutting to one and the other sides of the rib-like land portion (10) and extending in the tire circumferential direction; and
a pair of left and right first land portions (11, 11) abutting to one and the other outsides of the first main grooves (21, 21) and extending in the tire circumferential direction,
wherein a narrow groove (31) extending in the tire circumferential direction is provided on the rib-like land portion (10), and a plurality of lug grooves (24) which do not communicate with the first main grooves (21, 21) and incline relative to an equatorial line (E) of the tire, and any one of a wavy narrow groove and a zigzag narrow groove (32) extending in the tire circumferential direction, are provided on each of the first land portions (11, 11), and
**characterized in that**:
the shortest distance W2 between the foregoing one of the wavy narrow groove and zigzag narrow groove (32) and an outside wall of the first land portions (11, 11) is set between 60 and 70%, inclusive, of a width W1 of each of the first land portions, and an amplitude W3 of the foregoing one of the wavy narrow groove and zigzag narrow groove (32) is set between 5 and 12%, inclusive, of the width W1 of each of the first land portions (11, 11); and
the pneumatic tire further comprises:
a pair of left and right second main grooves (22, 22) abutting to one and the other outsides of the first land portions (11, 11) and extending in the tire circumferential direction;
a pair of left and right second land portions (12, 12) abutting to one and the other outsides of the second main grooves (22, 22) and extending in the tire circumferential direction;
a pair of left and right auxiliary grooves (23, 23) abutting to one and the other outsides of the second land portions (12, 12) and extending in the tire circumferential direction; and
third land portions (13, 13) abutting to one and the other outsides of the auxiliary grooves (23, 23) and extending in the tire circumferential direction.

2. The pneumatic tire according to claim 1, wherein groove widths of the respective lug grooves (24) are made wider in a region outward with respect to a center (E) of the tread (1) than in a region closer to the center (E) thereof.

3. The pneumatic tire according to any one of claims 1 and 2, wherein at least one narrow groove (33) is arranged between each two of the lug grooves (24).

4. The pneumatic tire according to claim 1, wherein: a width (W) of the rib-like land portion (10) is between 9 and 13%, inclusive, of a ground contacting width (TW) of the tread (1); a distance (D1) between a centerline of each of the first main grooves (21, 21) and the tire equatorial line (E) is between 7 and 10%, inclusive, of the tread ground contacting width (TW); a distance (D2) between a centerline of each of the second main grooves (22, 22) and the tire equatorial line (E) is between 25 and 29%, inclusive, of the tread ground contacting width (TW); and a distance (D3) between a centerline of each of the auxiliary grooves (23, 23) and the tire equatorial line (E) is between 38 and 43%, inclusive, of the tread ground contacting width (TW).

5. The pneumatic tire according to claim 1, wherein, within a ground contacting surface of the tire, an area ratio of all of the grooves (21, 22, 23, 32) extending in the tire circumferential direction is between 25 to 35% inclusive.

6. The pneumatic tire according to any one of claims 1 to 5, wherein the second land portions (12, 12) include only narrow grooves (34, 35); and the third land portions (13, 13) include only narrow grooves (36, 37) within the tire ground contacting surface.

7. The pneumatic tire according to any one of claims 1 to 6, wherein a number of pitches of a repeated element of the tread is between 70 and 80 inclusive.

8. The pneumatic tire according to any one of claims 1 to 7, wherein the tread (1) has a directional pattern where a direction of rotation when the tire is mounted on a vehicle is specified.

## Patentansprüche

1. Luftreifen, mit:
einem rippenähnlichen Bodenabschnitt (10), der auf einem mittigen Abschnitt einer Lauffläche (1) angeordnet ist und sich in einer Umfangsrichtung des Reifens erstreckt;
einem Paar linker und rechter erster Hauptrillen (21, 21), die an die eine und die andere Seite des rippenähnlichen Bodenabschnitts (10) aneinanderstoßen und sich in der Umfangsrichtung des Reifens erstrecken; und
einem Paar linker und rechter erster Bodenabschnitte (11, 11), die an der einen und der anderen Außenseite der ersten Hauptrillen (21, 21) aneinanderstoßen und sich in der Umfangsrichtung des Reifens erstrecken,
wobei eine sich in der Umfangsrichtung des Reifens erstreckende enge Rille (31) auf dem rippenähnlichen Bodenabschnitt (10) bereitgestellt ist und eine Vielzahl von Stollenrillen (24), die nicht mit den erster Hauptrillen (21, 21) in Verbindung sind und relativ zu einer Äquatoriallinie (E) des Reifens ansteigen, und eine sich in der Umfangsrichtung des Reifens erstreckende enge wellenförmige Rille oder enge zick-zack-förmige Rille (32) auf jedem der ersten Bodenabschnitte (11, 11) bereitgestellt ist, und
**dadurch gekennzeichnet, dass**:
der kürzeste Abstand W2 zwischen der vorhergehenden engen wellenförmigen Rille oder engen zick-zack-förmigen Rille (32) und einer Außenwand der ersten Bodenabschnitte (11, 11) auf zwischen einschließlich 60 und 70 % einer Breite W1 von jedem der ersten Bodenabschnitte eingestellt ist, und eine Amplitude W3 der vorhergehenden engen wellenförmigen Rille oder engen zick-zack-förmigen Rille (32) auf zwischen einschließlich 5 und 12 % der Breite W1 von jedem der ersten Bodenabschnitte (11, 11) eingestellt ist; und
der pneumatische Reifen des Weiteren aufweist:
ein Paar linker und rechter zweiter Hauptrillen (22, 22), die an die eine und die andere Außenseite der ersten Bodenabschnitte (11, 11) aneinanderstoßen und sich in der Umfangsrichtung des Reifens erstrecken;
ein Paar linker und rechter zweiter Bodenabschnitte (12, 12), die an der einen und der anderen Außenseite der zweiten Hauptrillen (22, 22) aneinanderstoßen und sich in der Umfangsrichtung des Reifens erstrecken;
einem Paar linker und rechter Hilfsrillen (23, 23), die an die eine und die andere Außenseite der zweiten Bodenabschnitte (12, 12) aneinanderstoßen, und sich in der Umfangsrichtung des Reifens erstrecken; und
dritte Bodenabschnitte (13, 13), die an der einen und der anderen Außenseite der Hilfsrillen (23, 23) aneinanderstoßen und sich in der Umfangsrichtung des Reifens erstrecken.

2. Luftreifen nach Anspruch 1, bei dem Rillenbreiten der jeweiligen Stollenrillen (24) in einem Bereich außerhalb einer Mitte (E) der Lauffläche (1) breiter ausgeführt sind als in einem Bereich näher an ihrer Mitte (E).

3. Luftreifen nach einem der Ansprüche 1 und 2, bei dem mindestens eine enge Rille (33) zwischen jeweils zwei der Stollenrillen (24) angeordnet ist.

4. Luftreifen nach Anspruch 1, bei dem eine Breite (W) des rippenähnlichen Bodenabschnitts (10) zwischen einschließlich 9 und 13 % einer Bodenkontaktbreite (TW) der Lauffläche (1) ist, ein Abstand (D1) zwischen einer Mittellinie von jeder der ersten Hauptrillen (21, 21) und der Reifenäquatoriallinie (E) zwischen einschließlich 7 und 10 % der Laufflächenbodenkontaktbreite (TW) ist, ein Abstand (D2) zwischen einer Mittellinie von jeder der zweiten Hauptrillen (22, 22) und der Reifenäquatoriallinie (E) zwischen einschließlich 25 und 29 % der Laufflächenbodenkontaktbreite (TW) ist und ein Abstand (D3) zwischen einer Mittellinie von jeder der Hilfsrillen (23, 23) und der Reifenäquatoriallinie (E) zwischen einschließlich 38 und 43 % der Laufflächenbodenkontaktbreite (TW) ist.

5. Luftreifen nach Anspruch 1, bei dem innerhalb einer Bodenkontaktfläche des Reifens ein Flächenverhältnis sämtlicher sich in der Umfangsrichtung des Reifens erstreckender Rillen (21, 22, 23, 32) zwischen einschließlich 25 bis 35 % ist.

6. Luftreifen nach einem der Ansprüche 1 bis 5, bei dem die zweiten Bodenabschnitte (12, 12) nur enge Rillen (34, 35) aufweisen und die dritten Bodenabschnitte (13, 13) nur enge Rillen (36, 37) innerhalb der Reifenbodenkontaktfläche aufweisen.

7. Luftreifen nach einem der Ansprüche 1 bis 6, bei dem eine Anzahl eines sich wiederholenden Elements der Lauffläche zwischen einschließlich 70 und 80 ist.

8. Luftreifen nach einem der Ansprüche 1 bis 7, bei dem die Lauffläche (1) eine richtungsgebundene Struktur aufweist, bei der eine Drehrichtung festgelegt ist, wenn der Reifen an einem Fahrzeug montiert wird.

## Revendications

1. Bandage pneumatique, comprenant :
une portion de plage semblable à une nervure (10) située sur une portion centrale d'une bande de roulement (1) et s'étendant dans la direction circonférentielle du bandage ;
une paire de premières rainures principales gauche et droite (21, 21) butant contre un côté et l'autre de la portion de plage semblable à une nervure (10) et s'étendant dans la direction circonférentielle du bandage ; et
une paire de premières portions de plage gauche et droite (11, 11) butant contre un côté extérieur et l'autre côté extérieur des premières rainures principales (21, 21) et s'étendant dans la direction circonférentielle du bandage,
où une rainure étroite (31) s'étendant dans la direction circonférentielle du bandage est réalisée sur la portion de plage semblable à une nervure (10), et une pluralité de gorges transversales (24) qui ne communiquent pas avec les premières rainures principales (21, 21) et sont inclinées relativement à une ligne équatoriale (E) du bandage, et l'une quelconque d'une rainure ondulée étroite et d'une rainure en zigzag étroite (32) s'étendant dans la direction circonférentielle du bandage, sont réalisées sur chacune des premières portions de plage (11, 11), et
**caractérisé en ce que** :
la distance la plus courte W2 entre la précédente parmi la rainure ondulée étroite et la rainure en zigzag étroite (32) et une paroi extérieure des premières portions de plage (11, 11) est réglée entre 60 et 70%, incluse, d'une largeur W1 de chacune des premières portions de plage, et une amplitude W3 de la précédente parmi la rainure ondulée étroite et la rainure en zigzag étroite (32) est réglée entre 5 et 12%, incluse, de la largueur W1 de chacune des premières portions de plage (11, 11) ; et
le bandage pneumatique comprend en outre :
une paire de deuxièmes rainures principales gauche et droite (22, 22) butant contre un et l'autre côté extérieur des premières portions de page (11, 11) et s'étendant dans la direction circonférentielle du bandage ;
une paire de deuxièmes portions de plage gauche et droite (12, 12) butant contre un et l'autre côté extérieur des deuxièmes rainures principales (22, 22) et s'étendant dans la direction circonférentielle du bandage ; et
une paire de rainures auxiliaires gauche et droite (23, 23) butant contre un et l'autre côté extérieur des deuxièmes portions de plage (12, 12) et s'étendant dans la direction circonférentielle du bandage ; et
des troisièmes portions de plage (13, 13) butant contre l'un et l'autre côté extérieur des rainures auxiliaires (23, 23) et s'étendant dans la direction circonférentielle du bandage.

2. Bandage pneumatique selon la revendication 1, dans lequel les largeurs des gorges transversales respectives (24) sont réalisées pour être plus larges dans une région vers l'extérieur par rapport à un centre (E) de la bande de roulement (1) que dans une région plus proche du centre (E) de celles-ci.

3. Bandage pneumatique selon l'une quelconque des revendications 1 et 2, dans lequel au moins une rainure étroite (33) est agencée entre à chaque fois deux des gorges transversales (24).

4. Bandage pneumatique selon la revendication 1, dans lequel : une largeur (W) de la portion de plage semblable à une nervure (10) est entre 9 et 13%, incluse, d'une largeur en contact avec le sol (TW) de la bande de roulement (1) ; une distance (D1) entre une ligne centrale de chacune des premières rainures principales (21, 21) et la ligne équatoriale du bandage (E) est entre 7 et 10%, incluse, de la largeur en contact avec le sol de la bande de roulement (TW) ; une distance (D2) entre une ligne centrale de chacune des deuxièmes rainures principales (22, 22) et la ligne équatoriale de bandage (E) est entre 25 et 29%, incluse, de la largueur en contact avec le sol (TW) de la bande de roulement ; et une distance (D3) entre une ligne centrale de chacune des rainures auxiliaires (23, 23) et la ligne équatoriale de bandage (E) est entre 38 et 43%, incluse, de la largueur de contact avec le sol de la bande de roulement (TW).

5. Bandage pneumatique selon la revendication 1, dans lequel, dans une surface en contact avec le sol du bandage, un rapport de toutes les rainures (21, 22, 23, 32) s'étendant dans la direction circonférentielle du bandage est entre 25 à 35% inclus.

6. Bandage pneumatique selon l'une quelconque des revendications 1 à 5, dans lequel les deuxièmes portions de plage (12, 12) comprennent seulement des rainures étroites (34, 35) ; et les troisièmes portions de plage (13, 13) comprennent seulement des rainures étroites (36, 37) dans la surface en contact avec le sol du bandage.

7. Bandage pneumatique selon l'une quelconque des revendications 1 à 6, dans lequel un nombre de pas d'un élément répété de la bande de roulement est entre 70 et 80 inclus.

8. Bandage pneumatique selon l'une quelconque des revendications 1 à 7, dans lequel la bande de roulement (1) présente un motif directionnel où une direction de rotation, lorsque le bandage est monté sur un véhicule, est spécifiée.
